(19) **Europäisches Patentamt / European Patent Office / Office européen des brevets**

(11) **EP 4 760 345 A1**

(12) # EUROPEAN PATENT APPLICATION

(43) Date of publication:
**17.06.2026  Bulletin 2026/25**

(21) Application number: **24219379.5**

(22) Date of filing: **12.12.2024**

(51) International Patent Classification (IPC):
**G01S 7/497** $^{(2006.01)}$      **G01S 17/34** $^{(2020.01)}$
**G01S 7/4911** $^{(2020.01)}$      **G01S 7/4912** $^{(2020.01)}$

(52) Cooperative Patent Classification (CPC):
**G01S 17/34; G01S 7/4911; G01S 7/4917; G01S 7/497**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Stichting IMEC Nederland
5656 AE Eindhoven (NL)**

(72) Inventors:
- **PÉREZ SANTACRUZ, Javier
  5022 CE Tilburg (NL)**
- **ROMME, Jac
  3118 JP Schiedam (NL)**

(74) Representative: **AWA Sweden AB
Matrosgatan 1
Box 5117
200 71 Malmö (SE)**

(54) **PHASE NOISE COMPENSATION FOR A FREQUENCY MODULATED CONTINUOUS WAVE, FMCW, LIGHT DETECTION AND RANGING, LIDAR, SYSTEM**

(57)     There is provided a device (100) for phase noise compensation for a frequency modulated continuous wave, FMCW, light detection and ranging, LIDAR, system (1000), said device comprising:
an optical interferometer (110) receiving a light signal from a source (210) of the LIDAR system, splitting the light signal into a first and a second light signal into a first and a second path having a preset delay therebetween, and combining the light signals having passed the first and the second path,
a detector (120) detecting the combined light signals;
a phase noise determination module (140) receiving the detected signal and determining a plurality of phase noise signals corresponding to integer numbers of the preset delay; and
a phase noise compensation module (150) receiving and processing a LIDAR response signal in a plurality of branches, and for each branch, compensating phase noise in the LIDAR response signal using one of the phase noise signals, and determining a fast Fourier transform, FFT, of the compensated signal for a specific range of distances to a target, the branches being configured to determine the FFT for mutually unique ranges.

Fig. 1

- - - - - - Optical
————— Electrical
—·—·— Digital

**Description**

<u>Technical field</u>

The present disclosure relates to light detection and ranging (LIDAR) and more specifically to a device and a method for phase noise compensation for a frequency modulated continuous wave (FMCW) LIDAR system.

<u>Background</u>

Light Detection and Ranging (LIDAR) is a well-known technology for measuring the distance between a LIDAR system and targets of the surrounding environment. LIDAR is used for a variety of applications such as advanced driving assistance systems (ADAS), robotics, aviation, surveillance, and 3D imaging. Using optical signals with short wavelengths enables LIDAR to use a high number of antenna elements, thereby providing high angular resolution. Further, LIDAR provides measurements at large distances, in terms of a few hundred meters, with range resolutions of a few centimeters. In conclusion, LIDAR is a suitable technology for middle and long-range automotive application (among others) due to its combination of large measuring range, range resolution, and angular resolution characteristics, compared to other sensing technologies in the market such as radar and stereo cameras.

There are three main LIDAR technologies: pulsed, amplitude-modulated continuous-wave (AMCW), and frequency-modulated continuous-wave (FMCW). Pulsed and AMCW technologies are based on modulating the intensity of the light. In contrast, FMCW LIDAR is based on modulation of the frequency of the optical signal. Due to its coherent detection scheme, FMCW LIDAR offers better receiver sensitivity, and thus improved signal-to-noise ratio (SNR), than pulsed or AMCW LIDAR. Moreover, the FMCW LIDAR eliminates the need for wide bandwidth electrical components, thereby reducing cost and power consumption. Due to its fine resolution, enhanced SNR, and low complex electrical circuits, FMWC LIDAR is well suited for middle and long-range automotive applications.

However, one of the major drawbacks with FMCW LIDAR systems is their sensitivity to phase noise. For example, the range measuring capability of FMCW LIDAR systems is significantly reduced under phase noise conditions, especially at larger distances. The effect may be particularly pronounced for FMCW LIDAR systems employing high linewidth lasers. Low linewidth lasers may be used as an alternative, mitigating negative effects of the phase noise at least to some extent. However, low linewidth lasers require a highly accurate manufacturing process, increasing the final cost of the lasers and thus of the LIDAR systems.

Hence, there is a need in the art for further improvements related to the FMCW LIDAR technology.

<u>Summary</u>

An objective of the present disclosure is to mitigate, alleviate or eliminate one or more of the above-identified deficiencies in the art and disadvantages singly or in any combination. These and other objectives are at least partly met by the invention as defined in the independent claims. Preferred embodiments are set out in the dependent claims.

According to a first aspect there is provided a device for phase noise compensation for a frequency modulated continuous wave, FMCW, light detection and ranging, LIDAR, system, said device comprising:

an optical interferometer configured to receive a light signal, wherein the light signal is a FMCW light signal generated by a source of the FMCW LIDAR system, wherein the optical interferometer is configured to split the light signal into a first light signal propagating in a first path and a second light signal propagating in a second path, wherein the first path has a preset delay in relation to the second path, and to combine the first and the second light signals having passed the first and the second path, respectively,
a detector for detecting the combined first and second light signals;
a phase noise determination module configured to receive a detected signal from the detector and to determine a plurality of phase noise signals corresponding to integer numbers of the preset delay; and
a phase noise compensation module configured to receive a LIDAR response signal, and to process the LIDAR response signal in a plurality of branches, wherein, for each branch, the phase noise compensation module is configured to compensate phase noise in the LIDAR response signal using one of the plurality of phase noise signals, and to determine a fast Fourier transform, FFT, of the compensated LIDAR response signal for a specific range of distances to a target, wherein the branches are configured to determine the FFT for mutually unique ranges.

According to a second aspect there is provided a frequency modulated continuous wave, FMCW, light detection and ranging, LIDAR, system comprising:

the device for phase noise compensation according to the first aspect;

a source configured to generate the light signal, said source comprising:

a laser configured to generate an optical carrier signal;
a frequency modulation module configured to modulate a frequency of the optical carrier signal; and
an optical beam splitter arranged in a path of the modulated optical carrier signal, and configured to split the modulated optical carrier signal into a LIDAR emission signal being emitted from the FMCW LIDAR system, and the light signal being sent to the optical interferometer of the device for phase noise compensation; and

a LIDAR detector configured to detect light from the LIDAR emission signal being reflected back towards the FMCW LIDAR system, to detect the LIDAR response signal.

It serves to mention that the phrases "FMCW LIDAR system" and "LIDAR system" may be used interchangeably throughout the present disclosure. By use of either of the two phrases, an FMCW LIDAR system is meant, if not explicitly stated otherwise.

By the term "source" is here meant any unit, device and/or element that can emit at least partially coherent light. The source may comprise a laser, as for example a laser diode, configured to generate an optical carrier signal. The optical carrier signal is generated in the form of laser light.

In this context the term "light" should be allowed a broad interpretation, not limited to visible electromagnetic radiation. Rather, the term "light" may also include for example ultra-violet light and infra-red light.

The source may comprise a frequency modulation module configured to modulate a frequency of the optical carrier signal. It serves to mention that the frequency modulation module may be external to the laser, such that the frequency modulation may be performed on the laser light output from the laser. Alternatively, the frequency modulation module may form part of the laser, such that the frequency modulation may be performed within the laser. By way of example, the frequency modulation may be performed by direct frequency modulation of the laser.

The source may further comprise an optical beam splitter arranged in a path of the modulated optical carrier signal, and configured to split the modulated optical carrier signal into a LIDAR emission signal which may be emitted from the FMCW LIDAR system, and the light signal being provided to the optical interferometer of the device for phase noise compensation. Thus, the "light signal" is the part of the light being split off from the modulated optical carrier signal, and directed to the optical interferometer. The remainder of the modulated optical carrier signal forms the LIDAR emission signal which may be emitted from the FMCW LIDAR system, for example towards a target.

The optical interferometer is configured to split the light signal into the first light signal propagating in the first path and the second light signal propagating in the second path. The first path has a preset delay in relation to the second path. By way of example, the preset delay may be provided by the first path and the second path having different optical path lengths. It serves to mention that the preset delay is a known preset delay. The preset delay may result in a phase difference between the first and second light signals corresponding to a difference in distance of light propagation in ambient air. By way of example, the preset delay may be chosen to correspond to a distance of 0.5 m, 1 m, 2 m, 3 m, 4 m, or 5 m. Given as a non-limiting example, the preset delay may be provided by one of the first and the second paths being longer that the other path. A longer path may be achieved by guiding the light in a loop, a spiral or the like, so that a long path length may be provided in a compact solution.

After having passed the first and the second paths respectively, the first and the second light signals are combined again. When the combined first and second light signals reach the detector, a beat frequency may be detected by the detector. The beat frequency is linked to the preset delay of the optical interferometer. By way of example, the beat frequency may be proportional to the preset delay.

By the term "detector" is here meant any unit or device comprising a light sensitive element configured to detect the light intensity impinging onto the light sensitive element, to produce an electrical signal in response thereof, and to allow read-out of the electrical signal representing the light intensity. Given as non-limiting examples, a detector may be, but is not limited to, a photodiode, a photo-multiplier tube (PMT), and an image detector such as a charge-coupled device (CCD) and a complementary metal oxide semiconductor (CMOS).

In the present context, the detector is typically a photodiode. In that respect the detector may be a balanced photodiode or an unbalanced photodiode.

The detector may be arranged such that the combined first and second signal impinges onto the detector, whereby the detector may detect the beat frequency formed by the combined signal.

The phase noise determination module is configured to receive the detected signal from the detector and to determine the plurality of phase noise signals corresponding to integer numbers of the preset delay of the optical interferometer. Typically, the phase noise determination module is configured to determine the phase noise signal corresponding to the preset delay based on the detected signal. Once the phase noise signal corresponding to the preset delay is determined, the plurality of phase noise signals may be determined based on the phase noise signal corresponding to the preset delay. The plurality of phase noise signals may thus correspond to the phase noise occurring at integer numbers of the preset delay. Put differently, the plurality of phase noise signals may represent phase noise signals occurring at a target located at a plurality of distances from the FMCW LIDAR system. Typically, the plurality of phase noise signals spans the full range of distances intended to be covered by the FMCW LIDAR system.

It serves to mention that the plurality of phase noise signals may not necessarily be all possible phase noise signals within the full range of distances to the target. Moreover, the plurality of phase noise signals may not necessarily correspond to consecutive integer numbers of the preset delay. Given as non-limiting examples, the plurality of phase noise signals may correspond to the integer numbers 1, 3, 5, 7, or 1, 4, 7, 10, of the preset delay.

As previously mentioned, the modulated optical carrier signal may be split into the light signal being provided to the optical interferometer and a LIDAR emission signal. The remainder of the modulated optical carrier signal thus forms the LIDAR emission signal which may be emitted from the FMCW LIDAR system, for example towards a target. In case the LIDAR emission signal reaches a target, at least some of the LIDAR emission signal may be reflected back towards the LIDAR system, forming the LIDAR response signal.

The phase noise compensation module receives the LIDAR response signal, and processes the LIDAR response signal in a plurality of branches. In each branch, the LIDAR response signal is compensated for phase noise by using one of the plurality of phase noise signals determined by the phase noise determination module, as previously mentioned. Thus, each branch is configured to compensate the LIDAR response signal for a phase noise associated with a specific target distance. Each such distance corresponds to an integer number of a preset distance corresponding to the preset delay. By way of example, each branch may compensate for phase noise corresponding to the phase noise at a different distance and thus a different delay. Put differently, each respective branch may be configured to compensate for phase noise corresponding to a mutually unique distance and thus a mutually unique delay.

In each branch, an FFT of the compensated signal is then determined, for a specific range of distances to the target. For each branch, the specific range of distances comprises the respective distance for which the LIDAR response signal was compensated for phase noise. By way of example, the FFT in each respective branch may be determined for a different range of distances to the target as compared to the other branches of the plurality of branches.

An advantage is that instead of determining the FFT for the full range of distances of the FWCW LIDAR system, the FFT may be determined for only a small range for each branch, for which the result may be the most relevant for the respective branch. In this manner, the complexity of the FFT determination may be significantly reduced, and a much more efficient phase noise compensation may be provided.

Another advantage is that by the present phase noise compensation, the signal-to-noise ratio (SNR) of the LIDAR response signal may be significantly improved, whereby a more accurate distance and/or velocity of the target may be determined. By the present arrangement, the FMCW LIDAR systems may reach SNR levels which may be limited by shot noise only, thereby providing higher detection accuracy than for example pulsed and AMCW LIDAR solutions.

Yet another advantage is that applying the proposed phase noise compensation enables the LIDAR system to use a laser with relative high linewidth, as opposed to a low linewidth laser. Lasers of higher linewidth are cheap to manufacture relative to low linewidth lasers, thus the overall cost of FMCW LIDAR system may be reduced, while still avoiding the impairments related to phase noise.

The LIDAR detector of the FMCW LIDAR system configured to detect the LIDAR response signal is also a "detector" according to what has been described above. Thus, by way of example, the LIDAR detector may be, but is not limited to, a balanced and/or unbalanced photodiode, a photo-multiplier tube (PMT), and an image detector.

It serves to mention that a small portion of the LIDAR emission signal may be split off from the LIDAR emission signal prior to the LIDAR emission signal being emitted from the LIDAR system. The portion being split off from the LIDAR emission signal may be referred to as a local oscillator signal. The LIDAR emission signal may subsequently be emitted for example towards a target. In case the LIDAR emission signal reaches a target, at least some of the LIDAR emission signal may be reflected back towards the LIDAR system. The LIDAR emission signal being reflected back and the local oscillator signal may then be combined again, at the LIDAR system. When the combined signals reach the LIDAR detector, a beat frequency may be detected by the LIDAR detector. This beat frequency is linked to the distance between the LIDAR system and the target. In the present LIDAR system, the combined signal may be detected by the LIDAR detector, thereby detecting the LIDAR response signal.

It is conceivable that the target may have a zero velocity with respect the LIDAR system, and more specifically the LIDAR detector. Thus, the distance between the target and the LIDAR detector may not be changing. This situation may be referred to as a static scenario. In a static scenario the LIDAR response signal is assumed to be without influence of the Doppler effect. Under this assumption, each frequency of the beat frequency is associated to a specific target distance.

However, it is equally conceivable that the target may change its distance with respect to the LIDAR system, i.e. the target may have a non-zero velocity with respect to the LIDAR system, resulting in a dynamic scenario. In a dynamic scenario, the LIDAR response signal may be affected by the Doppler effect caused by the movement of the target, which in turn may affect the beat frequency. Further details of the dynamic scenario will be discussed later.

According to an embodiment, the phase noise compensation module is further configured to combine the FFTs of the compensated LIDAR response signal from all the branches, thereby compiling an FFT of the compensated LIDAR response signal for all ranges of distances to the target.

By combining the FFTs of the compensated LIDAR response signal from all the branches, an FFT may be provided covering the full range of distances covered by the LIDAR system, without having to perform the FFT calculation of the full range of distances. Thus, an FFT for the full range of distances may be determined in a less computationally complex manner.

It should be realized that the phase noise determination module is not necessarily limited to determining the plurality of phase noise signals such that the plurality of phase noise signals correspond to only integer numbers of the preset delay.

According to an embodiment, the phase noise determination module is configured to determine the plurality of phase noise signals to further comprise phase noise signals corresponding to non-integer numbers of the preset delay.

Thus, the plurality of phase noise signals is not limited to comprising only phase noise signals corresponding to integer numbers of the preset delay, but may optionally also comprise phase noise signals corresponding to non-integer multiples of the preset delay.

By way of example, non-integer numbers may be half-integer numbers, quarter-integer numbers, or any other fractional numbers. Given as non-limiting examples, the plurality of phase noise signals may comprise phase noise signals corresponding to the non-integer numbers 1/2, 3/2, 5/2 and/or 1/4, 2/4, 3/4, 5/4 of the preset delay, in addition to the integer numbers.

As previously mentioned, the phase noise compensation module receives the LIDAR response signal, and processes the LIDAR response signal in a plurality of branches. In each branch, the LIDAR response signal is compensated for phase noise by using one of the plurality of phase noise signals determined by the phase noise determination module, associated with a specific target distance. It serves to mentioned that, in case the plurality of phase noise signals comprises phase noise signals corresponding to non-integer numbers of the preset delay, in addition to integer numbers, each such distance corresponds to an integer number or a non-integer number of the preset distance corresponding to the preset delay. Thus, in addition to the branches in which the LIDAR response signal is compensated for a phase noise signal corresponding to an integer number of the preset delay, the plurality of branches may further comprise branches in which the LIDAR response signal is compensated for a phase noise signal corresponding to a non-integer number of the preset delay.

The use of phase noise signals corresponding to also non-integer numbers of preset delays, in addition to integer numbers, provides a finer range granularity. This, in turn, may improve the accuracy of the phase noise compensation since with a finer range granularity the phase noise of the target is more likely to be close to the phase noise signals of the plurality of phase noise signals. After compensation of the LIDAR response signal with the plurality of phase noise signals, the residual phase noise may be further reduced.

It serves to mention that the use of phase noise signals corresponding to also non-integer numbers of the preset delay may increase the complexity to the computation. Thus, implementation may require a balance between accuracy and computational complexity, suitable for the respective use case requirements. By way of example, phase noise signals corresponding to integer numbers of the preset delay may be used for a course phase noise compensation with low computational complexity, whereas phase noise signals corresponding to also non-integer numbers of the preset delay may be used to further refine the compensation, providing higher accuracy, however also higher computational complexity.

An advantage with this embodiment is that a device for phase noise compensation with a finer range granularity and therefor higher accuracy may be provided.

According to an embodiment, for each branch, the phase noise compensation module is configured for determining the one of the plurality of phase noise signals to be used for compensating the phase noise in the LIDAR response signal, wherein said determining comprises selecting candidate phase noise signals from the plurality of phase noise signals, and testing the candidate phase noise signals.

As previously mentioned in the present disclosure, the target may change its distance, i.e. have a non-zero velocity, with respect to the LIDAR system, referred to as a dynamic scenario. In a dynamic scenario, the LIDAR response signal may be affected by the Doppler effect caused by the movement of the target, which in turn may affect the beat frequency. Therefore, a beat frequency of the LIDAR response signal may be associated with any target distance. Consequently, an uncertainty may arise as to what phase noise signal of the plurality of phase noise signals to use for compensation in each respective branch. It is conceivable to compensate for all of the plurality of phase noise signals in each branch, and determine an FFT for all of the results in each branch, and then select the one with maximum peak power. However, this would significantly increase the computational complexity of the phase noise compensation method. Thus, by selecting candidate phase noise signals from the plurality of phase noise signals, and preferably just selecting a few candidate phase noise signals, and then testing the candidate phase noise signals, may significantly reduce the computational complexity.

For each branch, a number of candidate phase noise signals may be selected from the plurality of phase noise signals. Each of the selected candidate phase noise signals may then be tested, one by one. By way of example, each of the selected candidate phase noise signals may be tested by being used for compensating the LIDAR response signal for phase noise, and determining an FFT of the compensated LIDAR response signal. By way of example, the candidate phase noise signal having the highest maximum peak power after the FFT may be identified and selected as the one of the plurality of phase noise signals to be used for compensating the phase noise in the LIDAR response signal, in that particular branch. By way of example, the selecting and testing of candidate phase noise signals may be performed in a single round. Alternatively, however, the selecting and testing of candidate phase noise signals may be performed iteratively a number of times.

An advantage with this embodiment is that a device for phase noise compensation for a FMCW LIDAR system may be provided, that may accurately determine distances to targets even when the target is moving with respect to the LIDAR system, and yet maintaining low computational complexity, and thus maintaining fast processing.

According to an embodiment, said determining comprises iteratively selecting candidate phase noise signals from the plurality of phase noise signals, and testing the candidate phase noise signals.

According to an embodiment, for each branch, the phase noise compensation module is configured for determining the one of the plurality of phase noise signals to be used for compensating the phase noise in the LIDAR response signal, wherein said determining comprises:

selecting a set of candidate phase noise signals from the plurality of phase noise signals, wherein the candidate phase noise signals of the set are distributed with the candidate phase noise signals of the set corresponding to non-consecutive integer numbers;

testing the candidate phase noise signals by, for each of the candidate phase noise signals:

compensating the LIDAR response signal using the candidate phase noise signal;
determining the FFT of the compensated LIDAR response signal;
identifying the candidate phase noise signal having a highest maximum peak power after the FFT;
selecting the identified candidate phase noise signal and iteratively repeating selecting a new set of candidate phase noise signals around the identified candidate phase noise signal, testing the candidate phase noise signals of the new set, and updating the identifying of the candidate phase noise signal having the highest maximum peak power after the FFT,
determining the one of the plurality of phase noise signals to be used for compensating the phase noise in the LIDAR response signal, based on the candidate phase noise signal having the highest maximum peak power after the FFT, at termination of said iteratively repeating.

By the phrase that the new set of candidate phase noise signals are selected "around" the identified candidate phase noise signal is here meant that the new set is selected so as to comprise at least one new phase noise signal on either side of the identified candidate phase noise signal, with respect to the integer numbers. Put differently, the new set is selected such that at least one new phase noise signal corresponds to an integer number being lower than that of the identified candidate phase noise signal, and such that at least one other new phase noise signal corresponds to an integer number being higher than that of the identified candidate phase noise signal.

As mentioned, the set of candidate phase noise signals may be selected so that the candidate phase noise signals of the set are distributed across the plurality of phase noise signals to correspond to non-consecutive integer numbers. Thus, the candidate phase noise signals may have one or more non-selected phase noise signals therebetween. Put differently, the set of candidate phase noise signals are selected such that they are spread out across at least a portion of the plurality of phase noise signals.

By way of example, the set of candidate phase noise signals may at first be sparsely distributed across a wide portion of the plurality of phase noise signals. Once the candidate phase noise signal having the highest maximum peak power after FFT has been identified, the new set of candidate phase noise signals may be selected within a more narrow portion of the plurality of phase noise signals, in the vicinity of the identified candidate phase noise signal.

According to an embodiment, the set of candidate phase noise signals comprises two or three candidate phase noise signals.

According to an embodiment, the new set of candidate phase noise signals comprises two new candidate phase noise signals selected symmetrically around the identified candidate phase noise signal, and at a distance to the identified candidate phase noise signal being smaller than a distance between the identified candidate phase noise signal and an adjacent candidate phase noise signal in a preceding set of candidate phase noise signals, wherein the distance from either one of the two new candidate phase noise signals to the identified candidate phase noise signal is iteratively smaller.

By iteratively selecting candidate phase noise signals closer and closer to the identified candidate phase noise signal having a highest maximum peak power, the search is more and more concentrated in the region where the phase noise signal having a highest maximum peak power among all of the plurality of phase noise signals may likely be found. Moreover, the search is moved away from the other regions where this phase noise signal is likely not to be found, and thus no computational power is spent on these regions.

An advantage with this embodiment is that the phase noise signal having a highest maximum peak power among all of the plurality of phase noise signals may quickly and efficiently be found, yet maintaining low computational complexity, and thus maintaining fast processing, even for dynamic scenarios.

According to an embodiment, the phase noise determination module is further configured to:

extract a phase angle ramp of the detected signal,
on a condition that a phase difference between a phase angle of the phase angle ramp and a consecutive phase angle of the phase angle ramp is larger than or equal to $2\pi$, add a multiple of $2\pi$ to the consecutive phase angle of the phase angle ramp, and
subtract a reference phase angle ramp from the extracted phase angle ramp, wherein a slope of the reference phase angle ramp is determined by the preset delay, to determine a phase noise signal of a plurality of phase noise signals, corresponding to the preset delay.

The operation of adding a multiple of $2\pi$ to the consecutive phase angle of the phase angle ramp if the phase difference between a phase angle and a consecutive phase angle of the phase angle ramp is larger than or equal to $2\pi$, is sometimes referred to as an "unwrap" operation. By way of example, "unwrap" is the name of this operation in "Matlab" - a programming and numeric computing program provided by MathWorks Inc, Natick, MA, United States. The purpose of performing the unwrap operation on the extracted phase angle ramp is to eliminate $2\pi$ or 360° jumps in the extracted phase angle ramp.

By the term "reference phase angle ramp" is here meant a phase angle ramp without any added phase noise. By subtracting the reference phase angle ramp from the extracted phase angle ramp of the detected signal, what remains is the phase noise signal corresponding to the preset delay.

According to an embodiment, the preset delay of the first path in relation to the second path is a fixed preset delay.

An advantage with this embodiment is that an optical interferometer with a fixed delay may be easily manufactured.

According to an embodiment, the preset delay of the first path in relation to the second path is tunable.

By way of example, a tunable preset delay may be provided by means of a set of fixed delays interconnected by a set of optical switches. By setting the switches in different configuration, the light may be routed in a number of different ways through the fixed delays, whereby providing different optical path lengths and thus also different delays.

An advantage with this embodiment is that a device for phase noise compensation for a FMCW LIDAR system that may more precisely match the phase noise used for compensation to that of the signal reflected back from the target. The plurality of phase noise signals may represent phase noise signals occurring at a target located at a plurality of distances from the FMCW LIDAR system corresponding to integer numbers of the preset distance corresponding to the preset delay. However, the target may not necessarily be at a distance corresponding to an integer number of the preset distance, but may be somewhere in between. However, by the ability to tune the preset delay, and thus the preset distance, a closer match to the target distance may be made.

According to an embodiment, the detector is a balanced photodiode.

By a balanced photodiode is here meant a device comprising two photodiodes connected in series. When the two photodiodes detect the same level of light, i.e. when their generated electric signals are equal, their electric signals cancel each other out. By the present arrangement, detection of small differences in light level on the two photodiodes may be provided.

However, the detector may alternatively be of a different type. By way of example, the detector may alternatively be an unbalanced photodiode or an IQ optical receiver.

According to an embodiment, the device further comprises an analog-to-digital converter (ADC) configured to convert the detected signal from the detector, from an analog detected signal to a digital detected signal, and to send the digital detected signal to the phase noise determination module.

According to an embodiment, the device further comprises a transimpedance amplifier (TIA) configured to amplify the detected signal from the detector, and to send the amplified signal to the ADC.

According to a third aspect there is provided a method for phase noise compensation for a frequency modulated continuous wave, FMCW, light detection and ranging, LIDAR, system, said method comprising:

receiving, by an optical interferometer, a light signal, wherein the light signal is a FMCW light signal generated by a source of the FMCW LIDAR system;
splitting, by the optical interferometer, the light signal into a first light signal propagating in a first path and a second light signal propagating in a second path, wherein the first path has a preset delay in relation to the second path;
combining, by the optical interferometer, the first and the second light signals having passed the first and the second path, respectively;

detecting, by a detector, the combined first and second light signals;

receiving, by a phase noise determination module, a detected signal from the detector;

determining, by the phase noise determination module, a plurality of phase noise signals corresponding to integer numbers of the preset delay;

receiving, by a phase noise compensation module, a LIDAR response signal;

processing by the phase noise compensation module, the LIDAR response signal in a plurality of branches, wherein, for each branch:

compensating phase noise in the LIDAR response signal using one of the plurality of phase noise signals; and

determining a fast Fourier transform, FFT, of the compensated LIDAR response signal for a specific range of distances to a target, wherein the branches are configured to determine the FFT for mutually unique ranges.

According to an embodiment, the method further comprises:

combining, by the phase noise compensation module, the FFTs of the compensated LIDAR response signal from all the branches, thereby compiling an FFT of the compensated LIDAR response signal for all ranges of distances to the target.

According to an embodiment, the method further comprises, for each branch:

determining, by the phase noise compensation module, the one of the plurality of phase noise signals to be used for compensating the phase noise in the LIDAR response signal, wherein said determining comprises selecting candidate phase noise signals from the plurality of phase noise signals, and testing the candidate phase noise signals.

According to an embodiment, the method further comprises, for each branch, determining, by the phase noise compensation module, the one of the plurality of phase noise signals to be used for compensating the phase noise in the LIDAR response signal, wherein said determining comprises:

selecting a set of candidate phase noise signals from the plurality of phase noise signals, wherein the candidate phase noise signals of the set are distributed with the candidate phase noise signals of the set corresponding to non-consecutive integer numbers;

testing the candidate phase noise signals by, for each of the candidate phase noise signals:

compensating the LIDAR response signal using the candidate phase noise signal;

determining the FFT of the compensated LIDAR response signal;

identifying the candidate phase noise signal having a highest maximum peak power after the FFT;

selecting the identified candidate phase noise signal and iteratively repeating selecting a new set of candidate phase noise signals around the identified candidate phase noise signal, testing the candidate phase noise signals of the new set, and updating the identifying of the candidate phase noise signal having the highest maximum peak power after the FFT,

determining the one of the plurality of phase noise signals to be used for compensating the phase noise in the LIDAR response signal, based on the candidate phase noise signal having the highest maximum peak power after the FFT, at termination of said iteratively repeating.

Effects and features of the second and third aspects are largely analogous to those described above in connection with the first aspect. Embodiments mentioned in relation to the first aspect are largely compatible with the second and third aspects. It is further noted that the disclosure relates to all possible combinations of features unless explicitly stated otherwise.

Other objectives, features and advantages of the present disclosure will appear from the following detailed description, from the attached claims as well as from the drawings.

Brief descriptions of the drawings

The above, as well as additional objects, features and advantages of the present disclosure, will be better understood through the following illustrative and non-limiting detailed description, with reference to the appended drawings. In the drawings like reference numerals will be used for like elements unless stated otherwise.

Fig. 1 illustrates a frequency modulated continuous wave, FMCW, light detection and ranging, LIDAR, system, comprising a device for phase noise compensation.

Fig. 2 illustrates a block diagram of the functions of the phase noise determination module.

Fig. 3 illustrates a block diagram of the functions of the phase noise compensation module for a static scenario.

Fig. 4A schematically illustrates a procedure of determining the one of the plurality of phase noise signals to be used for compensating the phase noise in the LIDAR response signal in a branch, for a dynamic scenario.

Fig. 4B schematically illustrates further details of the procedure of determining the one of the plurality of phase noise signals to be used for compensating the phase noise in the LIDAR response signal, for a dynamic scenario.

Fig. 5 illustrates data, compensated and un-compensated for phase noise respectively, of a beat signal in the frequency domain obtained with three targets in front of the LIDAR system.

Fig. 6 illustrates a schematic block diagram shortly summarizing the method for phase noise compensation for a frequency modulated continuous wave, FMCW, light detection and ranging, LIDAR, system.

Detailed description

In cooperation with attached drawings, technical contents and detailed description are described hereinafter according to a preferable embodiment, being not used to limit the claimed scope. This inventive concept may be embodied in many different forms and should not be construed as limited to the embodiments set forth herein; rather, these embodiments are provided for thoroughness and completeness, and fully convey the scope of the inventive concept to the skilled person.

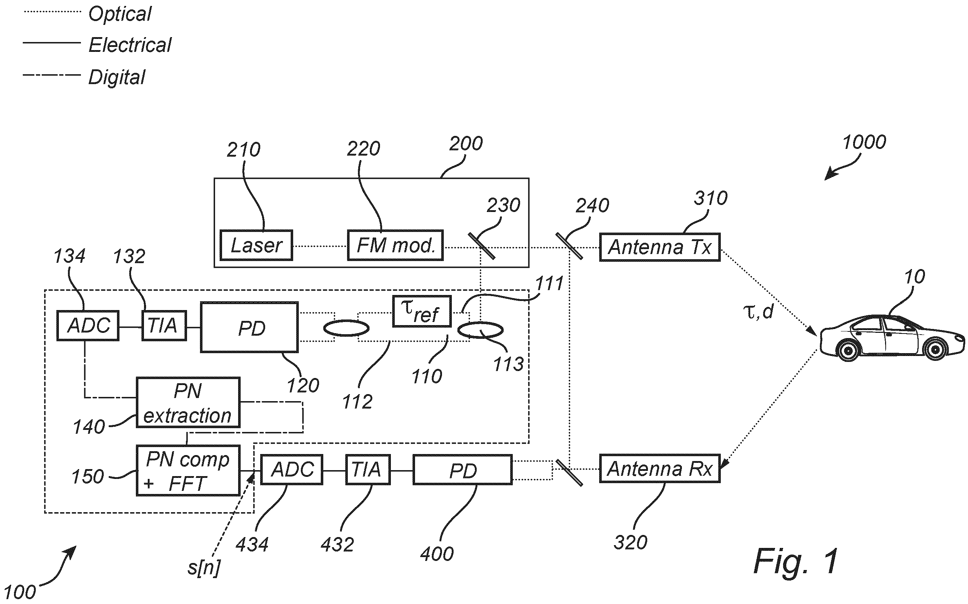

Fig. 1 illustrates a frequency modulated continuous wave (FMCW) light detection and ranging (LIDAR) system 1000.

The LIDAR system 1000 comprises a source 200 configured to generate light for the LIDAR system 1000. In that respect, the source 200 comprises a laser 210. The laser 210 is configured to generate an optical carrier signal in the form of laser light at a wavelength $\lambda$. To provide frequency modulation of the optical carrier signal, the source 200 further comprises a frequency modulation module 220. In the present example, the frequency modulation module 220 may be external to the laser 210, such that the frequency modulation may be performed on the laser light output from the laser 210. However, the frequency modulation module 220 may alternatively form part of the laser 210, such that the frequency modulation may be performed within the laser 210.

The LIDAR system 1000 may further comprise an optical beam splitter 230 arranged in a path of the modulated optical carrier signal. The optical beam splitter 230 may split the modulated optical carrier signal into a LIDAR emission signal and a light signal. The light signal may be sent to a device 100 for phase noise compensation, the details of which will be discussed later.

The LIDAR emission signal is to be emitted from the LIDAR system 1000. However, prior to the LIDAR emission signal being emitted, a small portion of the LIDAR emission signal may be split off from the LIDAR emission signal, by means of another optical beam splitter 240. The portion being split off may be referred to as a local oscillator signal.

The LIDAR emission signal may subsequently be emitted from the LIDAR system 1000 for example by a transmitter antenna 310, towards a target 10. In case the LIDAR emission signal reaches the target 10, at least some of the LIDAR emission signal may be reflected back towards the LIDAR system 1000. The two-way target delay and one-way target distance from the LIDAR system 1000 are here denoted $\tau$ and $d$, respectively. The relation between $\tau$ and $d$ may be written as:

$$\tau = \frac{2 \cdot d}{c}, \qquad (1)$$

where c is the speed of the light in the vacuum. The frequency of the modulated optical carrier signal may go from a minimum wavelength ($\lambda_{min}$) to a maximum wavelength ($\lambda_{max}$) during the up-ramp and in the opposite way during the down-ramp. The frequency separation between $\lambda_{min}$ and $\lambda_{max}$ determines the bandwidth of the modulated optical carrier signal or, in other words, the excursion frequency $f_{exc}$. The excursion frequency of the LIDAR systems 1000 is related to the ranging resolution $\Delta R$ according to:

$$\Delta R = \frac{0.89 \cdot c}{f_{exc}}. \qquad (2)$$

The signal being reflected back may be received by a receiver antenna 320 of the LIDAR system 1000. The LIDAR system 1000 further comprises a LIDAR detector 400. In the present example, the LIDAR detector 400 may be a balanced photodiode, however it should be understood that the LIDAR detector 400 may alternatively be another type of detector. The received reflected signal and the local oscillator signal may be combined on the LIDAR detector 400, thereby forming a beat frequency. The resulting electrical signal from the LIDAR detector 400, i.e. the LIDAR response signal, may be expressed as:

$$i_{PD-out}(t) = \sqrt{P_{LO}P_{Rx}} \cdot sin(2 \cdot \pi \cdot f_{beat}t + \Delta\varphi(t,\tau)), \qquad (3)$$

where $P_{L0}$ and $P_{rx}$ are the powers of the local oscillator signal and the received reflected signal, respectively. The beat frequency $f_{beat}$ may be expressed as:

$$f_{beat} = \frac{f_{exc} \cdot \tau}{T_{chirp}}, \qquad (4)$$

where $T_{chirp}$ is the time duration of each down- and up-ramp of the frequency modulation. Thus, the distance $d$ of the target 10 may be estimated as:

$$\hat{d} = \frac{c \cdot \widehat{f_{beat}} \cdot T_{chirp}}{2 \cdot f_{exc}}. \qquad (5)$$

It should be noted in equation (3) that there is an additional term, $\Delta\varphi(t,\tau)$, in the argument of the sine. $\Delta\varphi(t, \tau)$ indicates the phase noise difference between the original phase noise of the local oscillator signal and the delayed phase noise of the signal reflected of the target 10. The phase noise difference term $\Delta\varphi(t,\tau)$ varies with time and may be expressed as:

$$\Delta\varphi(t, \tau) = \varphi(t) - \varphi(t, \tau), \qquad (6)$$

where $\varphi(t)$ and $\varphi(t, \tau)$ refer to the phase noise of the local oscillator signal and the delayed phase noise of the signal reflected of the target 10, respectively.

In case $P_{L0}$ is large enough and the phase noise is null, the shot noise results the most dominant noise in the output of the LIDAR detector 400 ($i_{PD-out}(t)$). Thus, after having performed a fast Fourier transform (FFT) of the detected signal, the signal-to-noise ratio (SNR) is mainly limited by shot noise and can be expressed as:

$$SNR_{after-FFT} \approx \frac{Resp \cdot P_{Rx} \cdot T_{chirp}}{2 \cdot e}, \qquad (7)$$

where $Resp$ and $e$ are the responsivity of the photodiode in Ampere/Watt and the fundamental unit of charge in Coulomb, respectively.

However, in the presence of phase noise, equation (7) may not be valid. By way of example, phase noise of the modulated optical carrier signal produced by the source 200 may have different sources, such as current noise from the laser driver, temperature fluctuations, noise in the modulation signal, and/or laser linewidth.

To determine the signal degradations caused by phase noise, the power spectrum density (PSD) of equation (6) may be analyzed. Assuming that the phase noise is only caused by the laser linewidth and that $\varphi(t)$ follows a Wiener process with Lorentzian spectrum, the PSD of $\Delta\varphi(t, \tau)$ may be expressed as:

$$S(\omega, \tau, T) = T sinc^2\left(\frac{T\omega}{2}\right) e^{\frac{-2\tau}{\tau_c}}$$
$$+ \frac{\tau_c}{1 + \left(\frac{\omega\tau_c}{2}\right)^2}\left\{1 - e^{\frac{-2\tau}{\tau_c}}\left[cos(\omega\tau) + \frac{2}{\omega\tau_c}sin(\omega\tau)\right]\right\}, \qquad (8)$$

where $\tau_c$ is defined as the coherence time and is equal to $2/\Delta\omega$, with $\Delta\omega$ being the full-width at half-maximum (FWHM) of the laser or, in other words, the effective linewidth of the laser. The term $T$ of equation (8) corresponds to the time duration of $\Delta\varphi$ $(t, \tau)$ when performing the FFT. Hence, when $T$ is large enough, the term $T sinc^2\left(\frac{T\omega}{2}\right)$ of equation (8) can be approximated as a Dirac delta function.

It serves to mention that there are two effects of phase noise in FMCW LIDAR sensors. Firstly, phase noise may cause SNR reduction for each target detection, individually. This effect may be determined by the first distinguishable term of equation (8). Secondly, phase noise may cause phase noise interference between signals from different targets. This effect may be determined by the second distinguishable term of equation (8).

It should be noted that the spectrum of the differential phase noise expressed by equation (8) varies with $\tau$. Moreover, as mentioned above, equation (8) comprises two distinguishable terms. The first term indicates the beat signal while the second one refers to the phase noise pedestal. Neglecting the second term and assuming T tending to infinite, the beat signal level may be determined by the factor $e^{\frac{-2\tau}{\tau_c}}$. Thus, the power level of the beat signal is inversely proportional to $\Delta\omega$ and $\tau$. Put differently, the beat signal power is lower for higher linewidth of the laser and larger target distances. Then, in FMCW LIDAR systems under phase noise conditions, the SNR is not only limited by shot noise and thus equation (7) may be extended to:

$$SNR'_{after-FFT} \approx \frac{Resp \cdot P_{Rx} \cdot T_{chirp}}{2 \cdot e + Resp \cdot P_{Rx} \cdot \tau_c \left[1 - e^{\frac{-2\tau}{\tau_c}} \cdot \left(1 + \frac{2\tau}{\tau_c}\right)\right]} \cdot e^{\frac{-2\tau}{\tau_c}} . \qquad (9)$$

Thus, in case the local oscillator power is large enough, the SNR level after the FFT process is limited by the shot noise and the phase noise. It should be understood that the range measuring capability of LIDAR systems may be significantly reduced due to the phase noise. Thus, phase noise compensation to mitigate the two phase noise effects is advantageous.

Therefore, in order to compensate for the effects of phase noise, the LIDAR system 1000 further comprises a device 100 for phase noise compensation. The LIDAR system 1000 is configured to provide the light signal, split off from the modulated optical carrier signal by the beam splitter 230, to the device 100 for phase noise compensation. The device 100 comprises an optical interferometer 110 configured to receive the light signal. The light signal is split into a first light signal propagating in a first path 111 and a second light signal propagating in a second path 112. By way of example, the light signal may be split by an optical beam splitter 113, but the light signal may alternatively be split also in other manners. The first path 111 has a preset delay $\tau_{ref}$ in relation to the second path 112. The preset delay is a known value. In the present example, the preset delay is a fixed preset delay. However, the preset delay may alternatively be tunable.

After having passed the first 111 and the second 112 paths respectively, the first and the second light signals may be combined again. The resulting combined signal may form a beat frequency which is linked to the preset delay of the optical interferometer.

The device 100 further comprises a detector 120. In the present example, the detector 120 may be a balanced photodiode. However, it should be realized that the detector 120 may alternatively be a different type of detector, such as an unbalanced photodiode or an IQ optical receiver. The detector 120 is arranged to receive the combined first and second light signals from the optical interferometer 110. In this manner, the detector 120 may detect the resulting beat frequency caused by the first and second light signals. Subsequently, the electrical output signal of the detector 120 may be amplified with a transimpedance amplifier 132, TIA, and sampled with an analog-to-digital converter 134, ADC. It should be realized that, in case the detector 120 is an IQ optical receiver, a set of two TIAs and two ADCs may be required.

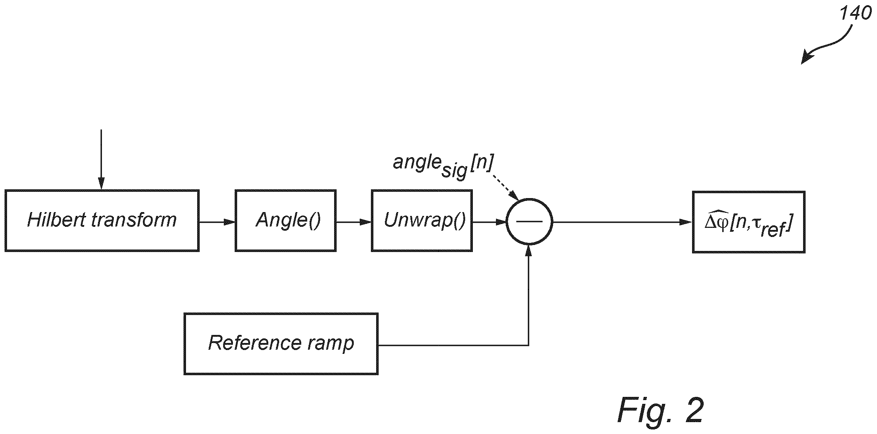

The device 100 further comprises a phase noise determination module 140. The phase noise determination module 140 is configured to receive the detected signal from the detector 120, after the signal has been digitized by the ADC. The phase noise determination module 140 is further configured to determine a plurality of phase noise signals corresponding to integer numbers of the preset delay. The details of the phase noise determination module 140 will be described in relation to Fig. 2.

The device 100 further comprises a phase noise compensation module 150. The phase noise compensation module 150 is configured to receive the LIDAR response signal $s[n]$ from the LIDAR detector 400. In the present example, the LIDAR response signal from the LIDAR detector 400 may first be amplified with a transimpedance amplifier 432, TIA, and sampled with an analog-to-digital converter 434, ADC, prior to being provided to the phase noise compensation module 150. The phase noise compensation module 150 is configured to process the LIDAR response signal in a plurality of branches, by compensating phase noise in the LIDAR response signal in each branch, using one of the plurality of phase noise signals. Further, the phase noise compensation module 150 is configured to determine a fast Fourier transform, FFT, of the compensated LIDAR response signal for a mutually unique range of distances to a target, in each respective branch.

Optionally the phase noise compensation module 150 may be configured to combine the FFTs of the compensated LIDAR response signal from all the branches. In this manner, a compiled FFT of the compensated LIDAR response signal for all ranges of distances to the target 10 may be provided.

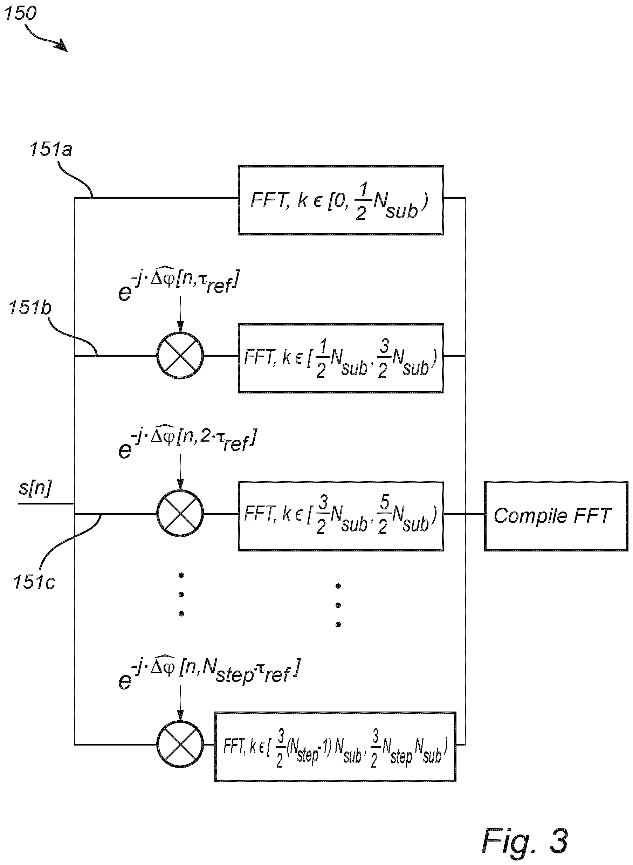

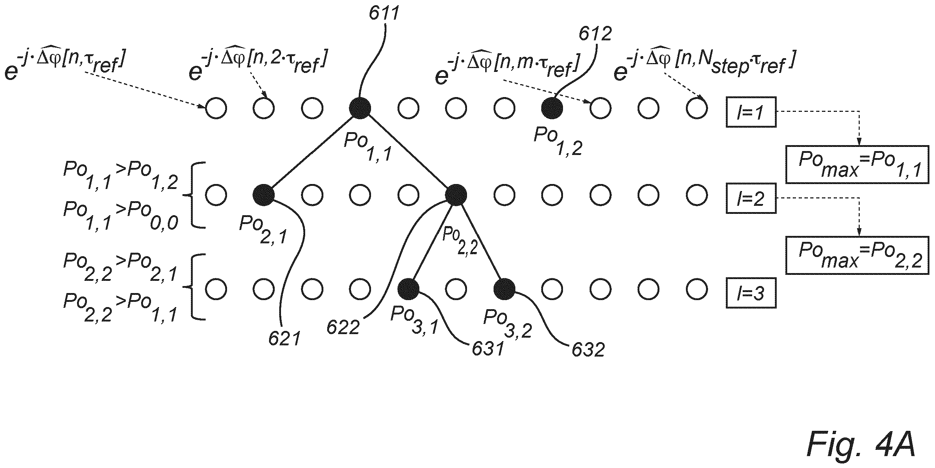

The details of the phase noise compensation module 150 will be described in relation to Fig. 3 and Figs 4A-4B.

Fig. 2 illustrates a block diagram of the functions of the phase noise determination module 140.

The digitized signal from the detector (not shown here) may be employed to extract the phase noise signal related to $\tau_{ref}$ for a determined time period. In order to properly compensate the phase noise of the LIDAR response signal, the ADC of the device 100 for phase noise compensation and the ADC of the LIDAR detector 400 should be triggered simultaneously.

As illustrated in Fig. 2, a Hilbert transform may optionally be applied to the digitized detected signal of the phase noise compensation device. An angle operation may then be used on the resulting complex signal, to extract a phase angle ramp of the detected signal. It serves to mention that the Hilbert transform may optionally be omitted. Given as a non-limiting example, the Hilbert transform may be omitted in case an IQ optical receiver is used as the detector.

Subsequently, on a condition that a phase difference between a phase angle of the phase angle ramp and a consecutive phase angle of the phase angle ramp is larger than or equal to $2\pi$, a multiple of $2\pi$ is added to the consecutive phase angle of the phase angle ramp. The operation may be referred to as an "unwrap" operation, and is carried out in the angle signal in order to avoid $2\pi$ radians or 360° jumps.

Once the phase angle ramp is unwrapped, a reference phase angle ramp is subtracted from the extracted phase angle ramp. The slope of the reference phase angle ramp is determined by the preset delay. In the up-ramp, the reference phase angle ramp is linear, where the initial value is the first value of the unwrapped phase angle ramp ($Ph_{init\text{-}up}$), while the last value is equal to $Ph_{init\text{-}up} + Ph_{ampl}$. $Ph_{ampl}$ may be calculated as:

$$Ph_{ampl}[rad] = 2\pi \cdot \tau_{ref} \cdot f_{exc} \qquad (10)$$

For the down-ramp, the reference phase angle ramp goes from $Ph_{init\text{-}down} + Ph_{ampl}$ to $Ph_{init\text{-}down}$, where $Ph_{init\text{-}down}$ is the first value of the unwrapped phase angle ramp for the down-ramp. After subtraction of the reference phase angle ramp the phase noise signal $\widehat{\Delta\varphi}[n,\ \tau_{ref}]$ corresponding to the preset delay $\tau_{ref}$ is determined.

Once this phase noise signal $\widehat{\Delta\varphi}[n,\ \tau_{ref}]$ has been determined, the rest of the plurality of phase noise signals corresponding to integer numbers of the preset delay may be determined. The phase noise signals associated with delays of $m \cdot \tau_{ref}$ ($m$ is an integer number) may be determined by the following equation:

$$\widehat{\Delta\varphi}[n,\ m \cdot \tau_{ref}] = \begin{cases} \displaystyle\sum_{p=0}^{m-1} \widehat{\Delta\varphi}[n - p\tau_{ref}, \tau_{ref}], & m \geq 1; \\ 0, & m = 0. \end{cases} \qquad (11)$$

It should be realized from equation (11) that $\widehat{\Delta\varphi}[n,\ \tau_{ref}]$ is delayed with respect to $\tau_{ref}$. To reduce the complexity of this delayed process, the sampling rate of the ADC in the phase noise compensation device 100 of Fig. 1 should preferably to be multiple a of $1/\tau_{ref}$. Otherwise, a more complex digital signal processing may be required.

Assuming that the sampling rate of the ADC for the LIDAR response signal is directly related to the maximum distance to measure ($\frac{f_{s-ADC-target}}{2} = f_{beat\text{-}max}$), the number of phase noise signals $\widehat{\Delta\varphi}[n,\ m \cdot \tau_{ref}]$ to calculate may be written as:

$$N_{step} = \frac{d_{max}}{d_{ref}}, \qquad (12)$$

where $d_{ref} = c/\tau_{ref}$. Since equation (11) is an accumulative operation, the next $\widehat{\Delta\varphi}[n,\ m \cdot \tau_{ref}]$ signal may be determined from the previous phase noise signal $\widehat{\Delta\varphi}[n,\ (m-1) \cdot \tau_{ref}]$ plus $\widehat{\Delta\varphi}[n - m\tau_{ref}, \tau_{ref}]$. Hence, once all the $N_{step}$ phase noise signals corresponding to $m \cdot d_{ref}$ ($m \in [1, N_{step}]$) have been determined for a specific up and down-ramp period, the phase noise compensation module may perform phase noise compensation of the LIDAR response signal.

It serves to mention that the phase noise determination module is not necessarily limited to determining the plurality of phase noise signals such that the plurality of phase noise signals corresponds to only integer numbers of the preset delay. Optionally, the phase noise determination module may be configured to determine the plurality of phase noise signals to further comprise phase noise signals corresponding to non-integer numbers of the preset delay, in addition to the integer numbers. In such a case, a modified version of equation (11) may be required. Modifications of equation (11) may be provided in a number of different manners. Therefore, given only as a non-limiting example, the phase noise signals corresponding to non-integer as well as integer numbers of the preset delay, may be determined by:

$$\widehat{\Delta\varphi}[n, \, m \cdot \tau_{ref}] \tag{11b}$$
$$= (m - \lfloor m \rfloor)\widehat{\Delta\varphi}[n - \lfloor m \rfloor \tau_{ref}, \, \tau_{ref}]$$
$$+ \sum_{p=0}^{\lfloor m \rfloor - 1} \widehat{\Delta\varphi}[n - p\tau_{ref}, \, \tau_{ref}]$$

where m is now an integer or non-integer number, and $\lfloor m \rfloor$ is the integer part of m. Thus, $m - \lfloor m \rfloor$ corresponds to fractional rest of m after subtraction of the integer part $\lfloor m \rfloor$.

Fig. 3 illustrates a block diagram of the functions of the phase noise compensation module 150 for a static scenario. During a statical scenario it is assumed that the targets are not moving with respect the LIDAR detector. Put differently, the scenario is assumed to be without influence of the Doppler effect. Under this assumption, each frequency of the beat signal spectrum is associated with a specific target distance. Therefore, the beat signal spectrum may be divided into a number of different distances, i.e. fragmented in a distance grid. Each frame of this grid may have the same bandwidth, and it is related to the target distance associated with the central part of the frame. More specifically, the spectrum of the beat signal may be divided into $N_{step}$ + 1 frames and each frame is associated with a respective determined phase noise signal $\widehat{\Delta\varphi}[n, \, m \cdot \tau_{ref}]$. In this manner, the phase noise compensation may be performed in different frames, allowing the complexity of the digital signal processing to be significantly reduced.

First, the phase noise compensation module 150 receives the LIDAR response signal s[n], detected by the LIDAR detector.

The processing of the LIDAR response signal is then split up into branches 151a, 151b, 151c, and in the present example $N_{step}$ + 1 branches. Each branch 151a, 151b, 151c aims at compensating the phase noise associated with a specific distance $m \cdot d_{ref}$. Put differently, each branch 151a, 151b, 151c may be dedicated to perform the phase noise compensation in a respective frame of the beat signal spectrum. Note, however, that there is also a branch that does not compensate for any phase noise, i.e. the uppermost branch of Fig. 3.

For each of the other $N_{step}$ branches, the phase noise compensation module is configured to compensate phase noise in the LIDAR response signal using one of the plurality of phase noise signals. The phase noise compensation in the $N_{step}$ lower branches is based on the multiplication of s[n] with an exponential complex whose argument is the negative of the determined phase noise signals $\widehat{\Delta\varphi}[n, \, m \cdot \tau_{ref}]$. In this manner, a phase noise compensation is realized in the time-domain. It serves to mention that the complex exponential may have opposite signs for an up-ramp and a down-ramp, respectively. By way of example, the complex exponential may be negative for an up-ramp and positive for a down-ramp.

It should be realized that in case the plurality of phase noise signals correspond to only integer numbers of the preset delay, the different phase noise signals used to compensate the LIDAR response signal for in the respective branches are provided by equation (11). However, in case the plurality of phase noise signals corresponds to integer as well as non-integer numbers of the preset delay, the different phase noise signals used to compensate the LIDAR response signal for in the respective branches may be provided in a different manner. For example, the phase noise signals may then be provided by equation (11b).

Subsequently, for each of the branches 151a, 151b, 151c, the phase noise compensation module is configured to determine a fast Fourier transform, FFT, of the compensated LIDAR response signal for a specific range of distances to a target. Each branch 151a, 151b, 151c is configured to determine the FFT for a mutually unique range.

Assuming that s[n] has a length of $N_{FFT}$, the FFT size is equal to $N_{FFT}$. Then, the $N_{step}$ lower branches of Fig. 3 only require $N_{sub}$ values from the full FFT operation. $N_{sub}$ can be calculated as:

$$N_{sub} = \text{round}(\frac{N_{FFT} \cdot d_{ref}}{2 \cdot d_{max}}). \tag{13}$$

The factor 2 of equation (13) assumes only the positive frequencies of the FFT spectrum. Since the FFT of each of the $N_{step}$ lower branches only require $N_{sub}$ specific outputs, the FFT operation may be minimized with respect to the full FFT where the complexity is proportional to $0.5 \cdot \log_2(N_{FFT}) \cdot N_{FFT}$.

Finally, after determining the FFT outputs in each branch 151a, 151b, 151c, all the FFT values may be combined in a compiled FFT of the compensated LIDAR response signal for all ranges of distances to the target. In this way, a phase noise compensation of the beat signal of the LIDAR response signal is determined in the whole spectrum with a granularity proportional to $\tau_{ref}$. It should be realized that this phase noise compensation method may be determined in the up and down-ramp beat signal, independently. Thus, with the phase noise compensation of the present disclosure, the SNR reduction caused by phase noise may be mitigated or even eliminated.

Fig. 4A schematically illustrates a procedure of determining the one of the plurality of phase noise signals to be used for compensating the phase noise in the LIDAR response signal in a branch, for a dynamic scenario.

As previously mentioned, the phase noise compensation described in relation to Fig. 3 is suitable for a static scenario. In a static scenario the LIDAR response signal is assumed to be without influence of the Doppler effect, and thus each frequency of the beat signal spectrum is associated with a specific target distance. It is therefore clear what phase noise signal (i.e. corresponding to the specific distance) to use for each of the branches.

However, in a dynamic scenario the target may be moving with respect to the LIDAR system, and the LIDAR response signal may therefore be affected by the Doppler effect. Therefore, in dynamic scenarios, the premise that each frequency of the beat signal spectrum is associated with a specific target distance may not be valid. In other words, each frequency of the beat signal spectrum may be related to any target distance since the Doppler effect also influences the final beat frequency. Therefore, it may not be clear which one phase noise signal $\widehat{\Delta\varphi}[n,\ m\cdot\tau_{ref}]$ of the plurality of phase noise signals to use for compensation in each respective branch. Thus, the phase noise compensation module should be configured for determining the one of the plurality of phase noise signals to be used for compensating the phase noise in the LIDAR response signal.

It is conceivable that the phase noise compensation module could compensate, for each branch, for all of the plurality of phase noise signals ( $\widehat{\Delta\varphi}[n,\ m\cdot\tau_{ref}]$, $m \in [0,N_{step}]$), then determine the FFT of all of the compensated signals and select the one with the highest peak power in each branch. However, such an approach would significantly increases the computational complexity of the phase noise compensation and make it computationally very demanding. Instead a much more efficient approach is proposed.

For each branch, the phase noise compensation module may be configured for determining the one of the plurality of phase noise signals to be used for compensating the phase noise in the LIDAR response signal. Said determining may comprise selecting and testing candidate phase noise signals from the plurality of phase noise signals. In the example that will now be described, the selecting and testing is performed iteratively. However, it should be realized that the selecting and testing may alternatively be performed during a single round.

The algorithm requires the following inputs: the LIDAR response signal ($s[n]$) for a specific up or down-ramp of the modulation, the plurality of phase noise signals for the targets grid $\left(e^{-j\cdot\widehat{\Delta\varphi}[n,\ m\cdot\tau_{ref}]}\ \left(m \in \left[0,N_{step}\right]\right)\right)$, $N_{sub}$ from equation (13), $N_{step}$ from equation (12), and the number of iterations, here referred to as layers, for each branch. Moreover, each of the $N_{step}$ lower branches may have a branch index $i$.

To determine the one phase noise signal to be used for compensation in a branch, first a set of candidate phase noise signals 611, 612 are selected from the plurality of phase noise signals. The first set of candidate phase noise signals 611, 612 are selected in the first iteration, here denoted layer $l$ = 1. The candidate phase noise signals 611, 612 of the set are distributed with the candidate phase noise signals of the set corresponding to non-consecutive integer numbers. In the present example, the first set comprises two phase noise signals $\widehat{\Delta\varphi}[n,\ m\cdot\tau_{ref}]$ arranged symmetrically in the middle of the plurality of phase noise signals, and thus of the distance grid.

Subsequently, each of the selected the candidate phase noise signals 611, 612 are tested by compensating the LIDAR response signal using the respective candidate phase noise signal 611, 612, and determining the FFT of the compensated LIDAR response signal. The FFT of the two compensated signals ($S_1[k]$ and $S_2[k]$) are compared, and the candidate phase noise signal providing the highest maximum peak power ($Po_{1,1}$ or $Po_{1,2}$) is identified. In the present example, the compensated LIDAR response signal at the left shows a higher peak power after FFT than the right one ($Po_{1,1}$ > $Po_{1,2}$), in the first iteration (layer $l$ = 1). Thus, the phase noise signal 611 is the phase noise signal providing the highest peak power in the first iteration.

Therefore, in the second iteration (layer $l$ = 2), a new set of candidate phase noise signals 621, 622 are selected around the identified candidate phase noise signal 611. The two new candidate phase noise signals 621, 622 are arranged symmetrically with respect to the identified candidate phase noise signal 611 of the previous layer. For the second iteration, an equivalent operation is realized. In other words, the candidate phase noise signals 621, 622 of the new set are tested, and the candidate phase noise signal providing the highest maximum peak power after the FFT is identified.

In each iteration, the maximum peak power ($Po_{max}$) and its FFT related compensated signal ($S_{final}[k]$) may be stored.

The phase noise compensation may continue for $N_{layer}$ iterations. In the present example, the compensation continues for three iterations, to layer $l$ = 3. At termination of the iterations, the phase noise compensation module may determine the one of the plurality of phase noise signals to be used for compensating the phase noise in the LIDAR response signal, based on the candidate phase noise signal having the highest maximum peak power after the FFT. By way of example, in case the candidate phase noise signal having the highest maximum peak power after the FFT is phase noise signal 631, then phase noise signal 631 may be determined to be the one phase noise signals to be used for compensating the phase noise in the LIDAR response signal in the present branch.

For higher numbers of iterations ($N_{layer}$), the proposed procedure may perform even better since it has higher granularity to search for the phase noise compensation signal. However, higher numbers of iteration may also result in higher computational complexity. In addition, $N_{layer}$ has a limit value that may be expressed as:

$$N_{layer-max} = \mathrm{ceil}(\log_2(\mathrm{round}\left(\frac{N_{step}}{3}\right))) + 1. \qquad (14)$$

Equation (14) serves as reference to determine the maximum number of iteration layers.

It serves to mention that the new set of candidate phase noise signals may comprise two new candidate phase noise signals selected symmetrically around the identified candidate phase noise signal of the preceding iteration. Further, the two new candidate phase noise signals may be selected at a distance to the identified candidate phase noise signal being smaller than a distance between the identified candidate phase noise signal and an adjacent candidate phase noise signal in a preceding set of candidate phase noise signals. In this manner, the distance from either one of the two new candidate phase noise signals to the identified candidate phase noise signal may be iteratively smaller.

It should be realized that in case the plurality of phase noise signals corresponds to integer as well as non-integer numbers of the preset delay, the spaces between the dots representing different phase noise signals for integer numbers in the respective iteration layers, may be filled with dots representing phase noise signals of also the non-integer numbers. In this manner, a higher granularity in each of the iteration layers may be provided. The different phase noise signals may be provided in a different manner. In case the plurality of phase noise signals corresponds to only integer numbers of the preset delay, the different phase noise signals used to compensate the LIDAR response signal for in the respective branches may be provided by equation (11). However, in case the plurality of phase noise signals corresponds to integer as well as non-integer numbers of the preset delay, the phase noise signals may for example be provided by equation (11b).

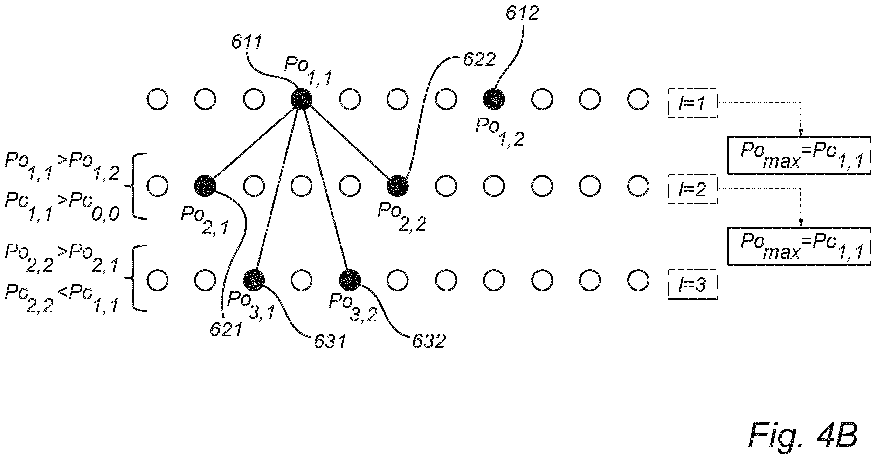

Fig. 4B schematically illustrates further details of the procedure of determining the one of the plurality of phase noise signals to be used for compensating the phase noise in the LIDAR response signal, for a dynamic scenario.

In the dynamic scenario, it is conceivable that the maximum peak powers ($Po_{l,1}$ and $Po_{l,2}$) of the current iteration layer are lower than the stored maximum peak power ($Po_{max}$) from a preceding iteration layer. In the present example, this is the case for the peak powers of iteration layer $l = 2$. In this case, the procedure may reduce the distance between the next phase noise candidates by reducing the distance between the integers of the selected candidates, and may determine the next two new candidate phase noise signals 631, 632 of the third iteration layer based on the identified phase noise signal 611 of the first iteration layer.

The phase noise compensation for dynamic scenarios may provide a significant reduction in the complexity of the digital signal processing, DSP, as compared to if compensating, for each branch, for all of the plurality of phase noise signals, then determine the FFT of all of the compensated signals. The reduction may be expressed as:

$$DSP_{reduction}\ [\%] = 100 \cdot (1 - \frac{2 \cdot N_{layer}}{N_{step}}). \qquad (15)$$

Setting $N_{layer} = N_{layer-max}$, the DSP reduction of equation (15) increases with $N_{step}$. Thus, the proposed phase noise compensation is more efficient to use when $N_{step}$ is high, than compared to calculating all possible combinations of phase noise signal compensations.

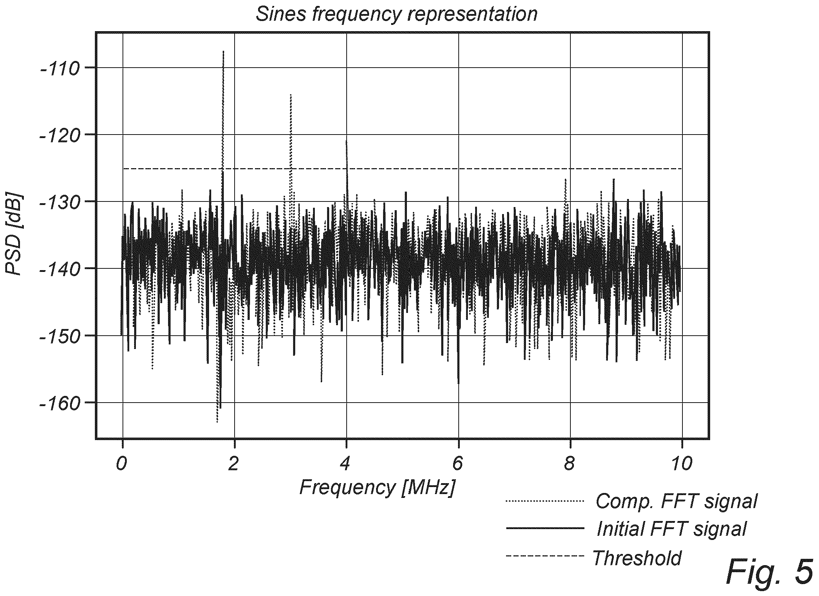

Fig. 5 illustrates a beat signal in the frequency domain obtained with three targets in front of the LIDAR system. In the present example, the targets are located at distances 9, 15, and 20 meters, respectively. The laser linewidth in the present example is 10 MHz.

The solid curve corresponds to the power spectrum density, PSD, of the FFT signal without having applied any phase noise compensation. The dotted curve corresponds to the power spectrum density, PSD, of the FFT signal where the signal has been compensated for the phase noise associated with each of the target distances.

The improvement of the dotted curve with respect to the solid curve is clearly noticeable. The three peaks in the dotted curve are clearer and overcome the threshold marked by the dashed line. The graph of Fig. 5 highlights the importance of phase noise compensation to mitigate or even eliminate the SNR reduction caused by phase noise.

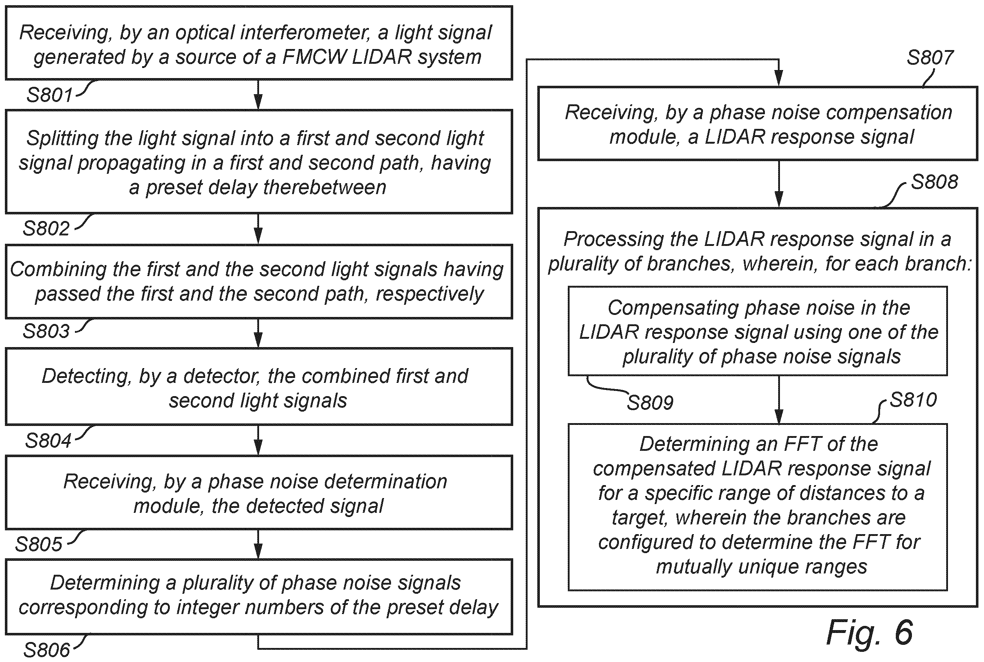

Fig. 6 illustrates a schematic block diagram shortly summarizing the method for phase noise compensation for a frequency modulated continuous wave, FMCW, light detection and ranging, LIDAR, system. It should be understood that the steps of the method, although listed in a specific order herein, may be performed in any order suitable.

The method may comprise receiving S801, by an optical interferometer, a light signal, wherein the light signal is a FMCW light signal generated by a source of the FMCW LIDAR system.

The method may comprise splitting S802, by the optical interferometer, the light signal into a first light signal propagating in a first path and a second light signal propagating in a second path, wherein the first path has a preset delay in relation to the second path.

The method may comprise combining S803, by the optical interferometer, the first and the second light signals having passed the first and the second path, respectively.

The method may comprise detecting S804, by a detector, the combined first and second light signals.

The method may comprise receiving S805, by a phase noise determination module, a detected signal from the detector.

The method may comprise determining S806, by the phase noise determination module, a plurality of phase noise signals corresponding to integer numbers of the preset delay.

The method may comprise receiving S807, by a phase noise compensation module, a LIDAR response signal.

The method may comprise processing S808 by the phase noise compensation module, the LIDAR response signal in a plurality of branches, wherein, for each branch:

compensating S809 phase noise in the LIDAR response signal using one of the plurality of phase noise signals; and
determining S810 a fast Fourier transform, FFT, of the compensated LIDAR response signal for a specific range of distances to a target, wherein the branches are configured to determine the FFT for mutually unique ranges.

The method may further comprise combining, by the phase noise compensation module, the FFTs of the compensated LIDAR response signal from all the branches, thereby compiling an FFT of the compensated LIDAR response signal for all ranges of distances to the target.

The method may further comprise, for each branch, determining, by the phase noise compensation module, the one of the plurality of phase noise signals to be used for compensating the phase noise in the LIDAR response signal, wherein said determining comprises selecting candidate phase noise signals from the plurality of phase noise signals, and testing the candidate phase noise signals.

Said determining may comprise:

selecting a set of candidate phase noise signals from the plurality of phase noise signals, wherein the candidate phase noise signals of the set are distributed with the candidate phase noise signals of the set corresponding to non-consecutive integer numbers;
testing the candidate phase noise signals by, for each of the candidate phase noise signals:

compensating the LIDAR response signal using the candidate phase noise signal;
determining the FFT of the compensated LIDAR response signal;
identifying the candidate phase noise signal having a highest maximum peak power after the FFT;
selecting the identified candidate phase noise signal and iteratively repeating selecting a new set of candidate phase noise signals around the identified candidate phase noise signal, testing the candidate phase noise signals of the new set, and updating the identifying of the candidate phase noise signal having the highest maximum peak power after the FFT,
determining the one of the plurality of phase noise signals to be used for compensating the phase noise in the LIDAR response signal, based on the candidate phase noise signal having the highest maximum peak power after the FFT, at termination of said iteratively repeating.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A device for phase noise compensation for a frequency modulated continuous wave, FMCW, light detection and ranging, LIDAR, system, said device comprising:

an optical interferometer configured to receive a light signal, wherein the light signal is a FMCW light signal generated by a source of the FMCW LIDAR system, wherein the optical interferometer is configured to split the light signal into a first light signal propagating in a first path and a second light signal propagating in a second path, wherein the first path has a preset delay in relation to the second path, and to combine the first and the second light signals having passed the first and the second path, respectively,
a detector for detecting the combined first and second light signals;
a phase noise determination module configured to receive a detected signal from the detector and to determine a plurality of phase noise signals corresponding to integer numbers of the preset delay; and
a phase noise compensation module configured to receive a LIDAR response signal, and to process the LIDAR response signal in a plurality of branches, wherein, for each branch, the phase noise compensation module is configured to compensate phase noise in the LIDAR response signal using one of the plurality of phase noise signals, and to determine a fast Fourier transform, FFT, of the compensated LIDAR response signal for a specific range of distances to a target, wherein the branches are configured to determine the FFT for mutually unique ranges.

2. The device according to claim 1, wherein the phase noise compensation module is further configured to combine the FFTs of the compensated LIDAR response signal from all the branches, thereby compiling an FFT of the compensated LIDAR response signal for all ranges of distances to the target.

3. The device according to any one of claims 1 or 2, wherein, for each branch, the phase noise compensation module is configured for determining the one of the plurality of phase noise signals to be used for compensating the phase noise in the LIDAR response signal, wherein said determining comprises selecting candidate phase noise signals from the plurality of phase noise signals, and testing the candidate phase noise signals.

4. The device according to claim 3, wherein said determining comprises iteratively selecting candidate phase noise signals from the plurality of phase noise signals, and testing the candidate phase noise signals.

5. The device according to any one of claims 1 or 2, wherein, for each branch, the phase noise compensation module is configured for determining the one of the plurality of phase noise signals to be used for compensating the phase noise in the LIDAR response signal, wherein said determining comprises:

selecting a set of candidate phase noise signals from the plurality of phase noise signals, wherein the candidate phase noise signals of the set are distributed with the candidate phase noise signals of the set corresponding to non-consecutive integer numbers;
testing the candidate phase noise signals by, for each of the candidate phase noise signals:

compensating the LIDAR response signal using the candidate phase noise signal;
determining the FFT of the compensated LIDAR response signal;

identifying the candidate phase noise signal having a highest maximum peak power after the FFT;
selecting the identified candidate phase noise signal and iteratively repeating selecting a new set of candidate phase noise signals around the identified candidate phase noise signal, testing the candidate phase noise signals of the new set, and updating the identifying of the candidate phase noise signal having the highest maximum peak power after the FFT,
determining the one of the plurality of phase noise signals to be used for compensating the phase noise in the LIDAR response signal, based on the candidate phase noise signal having the highest maximum peak power after the FFT, at termination of said iteratively repeating.

6. The device according to claim 5, wherein the new set of candidate phase noise signals comprises two new candidate phase noise signals selected symmetrically around the identified candidate phase noise signal, and at a distance to the identified candidate phase noise signal being smaller than a distance between the identified candidate phase noise signal and an adjacent candidate phase noise signal in a preceding set of candidate phase noise signals, wherein the distance from either one of the two new candidate phase noise signals to the identified candidate phase noise signal is iteratively smaller.

7. The device according to any one of the preceding claims, wherein the phase noise determination module is further configured to:

extract a phase angle ramp of the detected signal,
on a condition that a phase difference between a phase angle of the phase angle ramp and a consecutive phase angle of the phase angle ramp is larger than or equal to $2\pi$, add a multiple of $2\pi$ to the consecutive phase angle of the phase angle ramp, and

subtract a reference phase angle ramp from the extracted phase angle ramp, wherein a slope of the reference phase angle ramp is determined by the preset delay, to determine a phase noise signal of a plurality of phase noise signals, corresponding to the preset delay.

8. The device according to any one of the preceding claims, wherein the preset delay of the first path in relation to the second path is any one of a fixed preset delay or a tunable preset delay.

9. The device according to any one of the preceding claims, wherein the phase noise determination module is further configured to determine the plurality of phase noise signals to further comprise phase noise signals corresponding to non-integer numbers of the preset delay.

10. The device according to any one of the preceding claims, wherein the detector is a balanced photodiode.

11. A frequency modulated continuous wave, FMCW, light detection and ranging, LIDAR, system comprising:

the device for phase noise compensation according to any one of the preceding claims;
a source configured to generate the light signal, said source comprising:

a laser configured to generate an optical carrier signal;
a frequency modulation module configured to modulate a frequency of the optical carrier signal; and
an optical beam splitter arranged in a path of the modulated optical carrier signal, and configured to split the modulated optical carrier signal into a LIDAR emission signal being emitted from the FMCW LIDAR system, and the light signal being sent to the optical interferometer of the device for phase noise compensation; and

a LIDAR detector configured to detect light from the LIDAR emission signal being reflected back towards the FMCW LIDAR system, to detect the LIDAR response signal.

12. A method for phase noise compensation for a frequency modulated continuous wave, FMCW, light detection and ranging, LIDAR, system, said method comprising:

receiving, by an optical interferometer, a light signal, wherein the light signal is a FMCW light signal generated by a source of the FMCW LIDAR system;
splitting, by the optical interferometer, the light signal into a first light signal propagating in a first path and a second light signal propagating in a second path, wherein the first path has a preset delay in relation to the second path;
combining, by the optical interferometer, the first and the second light signals having passed the first and the second path, respectively;
detecting, by a detector, the combined first and second light signals;
receiving, by a phase noise determination module, a detected signal from the detector;
determining, by the phase noise determination module, a plurality of phase noise signals corresponding to integer numbers of the preset delay;
receiving, by a phase noise compensation module, a LIDAR response signal;
processing by the phase noise compensation module, the LIDAR response signal in a plurality of branches, wherein, for each branch:

compensating phase noise in the LIDAR response signal using one of the plurality of phase noise signals; and
determining a fast Fourier transform, FFT, of the compensated LIDAR response signal for a specific range of distances to a target, wherein the branches are configured to determine the FFT for mutually unique ranges.

13. The method according to claim 12, further comprising:
combining, by the phase noise compensation module, the FFTs of the compensated LIDAR response signal from all the branches, thereby compiling an FFT of the compensated LIDAR response signal for all ranges of distances to the target.

14. The method according to any one of claims 12 or 13, further comprising, for each branch:
determining, by the phase noise compensation module, the one of the plurality of phase noise signals to be used for compensating the phase noise in the LIDAR response signal, wherein said determining comprises selecting candidate phase noise signals from the plurality of phase noise signals, and testing the candidate phase noise signals.

15. The method according to any one of claims 12 or 14, further comprising, for each branch, determining, by the phase noise compensation module, the one of the plurality of phase noise signals to be used for compensating the phase noise in the LIDAR response signal, wherein said determining comprises:

selecting a set of candidate phase noise signals from the plurality of phase noise signals, wherein the candidate phase noise signals of the set are distributed with the candidate phase noise signals of the set corresponding to non-consecutive integer numbers;
testing the candidate phase noise signals by, for each of the candidate phase noise signals:

compensating the LIDAR response signal using the candidate phase noise signal;
determining the FFT of the compensated LIDAR response signal;

identifying the candidate phase noise signal having a highest maximum peak power after the FFT;
selecting the identified candidate phase noise signal and iteratively repeating selecting a new set of candidate phase noise signals around the identified candidate phase noise signal, testing the candidate phase noise signals of the new set, and updating the identifying of the candidate phase noise signal having the highest maximum peak power after the FFT,
determining the one of the plurality of phase noise signals to be used for compensating the phase noise in the LIDAR response signal, based on the candidate phase noise signal having the highest maximum peak power after the FFT, at termination of said iteratively repeating.

Fig. 1

Optical ........
Electrical ———
Digital —·—·—

Laser 210
FM mod. 220
200
230
240
Antenna Tx 310

ADC 134
TIA 132
PD 120
$\tau_{ref}$ 111
110
112
113

PN extraction 140

PN comp + FFT 150

ADC 434
TIA 432
PD 400
320
Antenna Rx

s[n]

100

1000

10

$\tau, d$

EP 4 760 345 A1

Fig. 2

EP 4 760 345 A1

Fig. 3

22

*Fig. 4A*

Fig. 4B

EP 4 760 345 A1

Fig. 5

Receiving, by an optical interferometer, a light signal generated by a source of a FMCW LIDAR system

S801

Splitting the light signal into a first and second light signal propagating in a first and second path, having a preset delay therebetween

S802

Combining the first and the second light signals having passed the first and the second path, respectively

S803

Detecting, by a detector, the combined first and second light signals

S804

Receiving, by a phase noise determination module, the detected signal

S805

Determining a plurality of phase noise signals corresponding to integer numbers of the preset delay

S806

Receiving, by a phase noise compensation module, a LIDAR response signal

S807

Processing the LIDAR response signal in a plurality of branches, wherein, for each branch:

S808

Compensating phase noise in the LIDAR response signal using one of the plurality of phase noise signals

S809

Determining an FFT of the compensated LIDAR response signal for a specific range of distances to a target, wherein the branches are configured to determine the FFT for mutually unique ranges

S810

Fig. 6

EP 4 760 345 A1

Europäisches
Patentamt

European
Patent Office

Office européen
des brevets

# EUROPEAN SEARCH REPORT

**Application Number**

EP 24 21 9379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2024/377514 A1 (GREENBERG SHACHAR [IL] ET AL) 14 November 2024 (2024-11-14) | 1-4,7-14 | INV. G01S7/497 |
| A | * paragraph [0062] - paragraph [0079]; figures 1-10 * | 5,6,15 | G01S17/34 G01S7/4911 |
| | ----- | | G01S7/4912 |
| Y | US 2019/195994 A1 (ORCHARD DAVID ARTHUR [GB] ET AL) 27 June 2019 (2019-06-27) * paragraph [0041] - paragraph [0046]; figures 1,2 * | 1-4,7-14 | |
| | ----- | | |
| Y | US 2016/161601 A1 (SEBASTIAN RICHARD L [US] ET AL) 9 June 2016 (2016-06-09) * paragraph [0039] * | 7 | |
| | ----- | | |
| A | US 5 847 817 A (ZEDIKER MARK S [US] ET AL) 8 December 1998 (1998-12-08) * column 11, line 39 - column 12, line 49; figure 2 * | 1-15 | |
| | ----- | | |
| A | US 2022/113379 A1 (VISWANATHA KUMAR BHARGAV [US] ET AL) 14 April 2022 (2022-04-14) * paragraph [0052] - paragraph [0053]; figure 9 * * paragraph [0058] - paragraph [0060]; figure 13 * | 1-15 | **TECHNICAL FIELDS SEARCHED (IPC)** G01S |
| | ----- | | |

The present search report has been drawn up for all claims

| Place of search | Date of completion of the search | Examiner |
|---|---|---|
| Munich | 22 May 2025 | Kaleve, Abraham |

EPO FORM 1503 03.82 (P04C01)

## ANNEX TO THE EUROPEAN SEARCH REPORT
## ON EUROPEAN PATENT APPLICATION NO.

EP 24 21 9379

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | | | Publication date | Patent family member(s) | | Publication date |
|---|---|---|---|---|---|---|
| US | 2024377514 | A1 | 14-11-2024 | US | 2024377514 A1 | 14-11-2024 |
| | | | | WO | 2022250775 A1 | 01-12-2022 |
| US | 2019195994 | A1 | 27-06-2019 | EP | 3452849 A1 | 13-03-2019 |
| | | | | US | 2019195994 A1 | 27-06-2019 |
| | | | | WO | 2017191285 A1 | 09-11-2017 |
| US | 2016161601 | A1 | 09-06-2016 | EP | 2972409 A1 | 20-01-2016 |
| | | | | US | 2014269790 A1 | 18-09-2014 |
| | | | | US | 2016161601 A1 | 09-06-2016 |
| | | | | US | 2018329042 A1 | 15-11-2018 |
| | | | | US | 2020011980 A1 | 09-01-2020 |
| | | | | US | 2022252704 A1 | 11-08-2022 |
| | | | | US | 2022268905 A1 | 25-08-2022 |
| | | | | US | 2025035759 A1 | 30-01-2025 |
| | | | | WO | 2014151046 A1 | 25-09-2014 |
| US | 5847817 | A | 08-12-1998 | NONE | | |
| US | 2022113379 | A1 | 14-04-2022 | CN | 116348783 A | 27-06-2023 |
| | | | | EP | 4226184 A1 | 16-08-2023 |
| | | | | JP | 7650967 B2 | 25-03-2025 |
| | | | | JP | 2023545411 A | 30-10-2023 |
| | | | | KR | 20230071188 A | 23-05-2023 |
| | | | | US | 11169246 B1 | 09-11-2021 |
| | | | | US | 2022113379 A1 | 14-04-2022 |
| | | | | US | 2023324514 A1 | 12-10-2023 |
| | | | | WO | 2022076225 A1 | 14-04-2022 |

EPO FORM P0459

For more details about this annex : see Official Journal of the European Patent Office, No. 12/82